# EUROPÄISCHE PATENTANMELDUNG

(11) **EP 0 662 586 A1**
(43) Veröffentlichungstag der Anmeldung: **12.07.1995**
(21) Anmeldenummer: 94119388.0
(22) Anmeldetag: 08.12.1994
(51) Int. Cl.: F21Q 3/02, F21V 5/00

(54) **Leuchte, insbesondere Kennleuchte**

(30) Priorität: 08.01.1994 DE 9400235 U
(71) Anmelder: Pintsch Bamag Antriebs- und Verkehrstechnik GmbH, D-46537 Dinslaken (DE)
(72) Erfinder: Hövermann, Gustav, D-47053 Duisburg (DE); Börgers, Peter, D-46537 Dinslaken (DE); Matzke, Thomas, D-46483 Wesel (DE)
(74) Vertreter: Wilhelm & Dauster Patentanwälte European Patent Attorneys

(57) **Zusammenfassung**

Bei einer Leuchte, insbesondere einer Kennleuchte mit einer Lichtquelle und einer um diese drehbaren Linsenoptik, die aus mehreren gleichmäßig auf einem um die Lichtquelle gelegten Kreis verteilten Linsen besteht, die auf einem Drehteller angeordnet sind, wird vorgesehen, die Linsen als Fresnellinsen (12) auf je einer Scheibe (9,10,11) auszubilden und diese Scheiben (9,10,11) jeweils mit zwei Rändern (9b,9c) unmittelbar aneinanderzusetzten und zu einem Linsenrahmen (8) zu setzen, der dann auf dem Drehteller (4) sitzt. Durch diese Ausgestaltung wird ein wesentlich einfacherer Aufbau erreicht.

## Beschreibung

Die Erfindung betrifft eine Leuchte, insbesondere eine Kennleuchte mit einer Lichtquelle und einer um diese drehbaren Linsenoptik, die aus mehreren gleichmäßig auf einem um die Lichtquelle gelegten Kreis verteilten Linsen besteht, die auf einem Drehteller angeordnet sind.

Leuchten dieser Art sind bekannt (DE-GM 92 01 864). Bei diesen Bauarten sind drei aus Glas bestehende plankonvexe Sammellinsen mit ihren konvexen Flächen nach außen weisend in einem ringförmigen Korb aus Kunststoff befestigt. Dieser Korb wiederum ist an seinem unteren Ende auf einem Drehteller befestigt, so daß die drei Sammellinsen sich um eine in der Drehachse des Drehtellers angeordnete Lichtquelle drehen können. Diese Bauart ist, da die Sammellinsen jeweils in Halterungen in dem Drehkorb angeordnet und diese dann auf dem Drehteller montiert werden müssen, verhältnismäßig aufwendig.

Der vorliegenden Erfindung liegt die Aufgabe zugrunde eine herstellungstechnisch einfachere Leuchte der eingangs genannten Art zu schaffen, die einfach und kompakt und ausreichend stabil ist.

Zur Lösung dieser Aufgabe werden bei einer Leuchte der eingangs genannten Art die Linsen als Fresnellinsen auf je einer Scheibe ausgebildet und diese Scheiben jeweils mit zwei Rändern unmittelbar aneinandergesetzt und zu einem Rahmen zusammengesetzt, der auf dem Drehteller sitzt.

Durch diese Ausgestaltung wird es überflüssig zunächst einzelne Sammellinsen in Halterungen einzusetzen und diese Halterungen dann zu einem Drehkorb zusammenzufügen, der mit dem Drehteller verbunden wird. Es reicht, wenn die üblicherweise vorgesehenen drei Linsen ausreichend sind, drei Scheiben jeweils zu einem Rahmen mit dreieckförmigem Querschnitt zusammenzusetzen und diesen so gebildeten Rahmen dann mit dem Drehteller zu verbinden.

In Weiterbildung der Erfindung besitzen die Scheiben jeweils um 120° abgewinkelte Randbereiche. Einer dieser Randbereiche ist mit einem nach außen abstehenden Zapfen und der andere mit entsprechenden Aussparungen versehen, so daß die Scheiben zu dem Dreiecksrahmen formschlüssig aneinandersetzbar sind. In einfacher Weise läßt sich dies dadurch erreichen, daß die Zapfen als zylindrische, längs der Oberkante des Randes verlaufende Wulstteile und die Ausnehmung als zylindrische Kammer ausgebildet ist. Diese Wulstteile lassen sich in ihrer Längsrichtung in die Ausnehmungen schieben und stellen einen formschlüssigen Halt dar. An der Unterseite der Ränder kann jeweils ein zum Rand fluchtender Zapfen zur Fixierung am Drehteller vorgesehen werden, wobei alle Scheiben in ihrer Mitte auf der Seite, auf der diese Zapfen angeordnet sind, noch mit Rastmitteln versehen sind, die beim Aufstecken des dreieckförmigen Rahmens zum Verrasten am Drehteller dienen.

Die Erfindung ist anhand eines Ausführungsbeispieles in der Zeichnung dargestellt und wird im folgenden beschrieben. Es zeigen:
- Fig. 1: einen Längsschnitt durch eine Kennleuchte gemäß der Erfindung mit einem rahmenförmigen, drehbaren Linsenkörper,
- Fig. 2: die schematische perspektivische Darstellung des drehbaren Linsenrahmens der Fig. 1,
- Fig. 3: die Innenansicht einer zum Aufbau des Linsenrahmens der Fig. 2 verwendeten Scheibe,
- Fig. 4: die Draufsicht auf den Linsenrahmen der Fig. 2,
- Fig. 5: die Draufsicht auf den Drehteller für den Linsenrahmen der Fig. 2, und
- Fig. 6: einen Schnitt durch den Drehteller der Fig. 5 längs der Linie VI-VI.

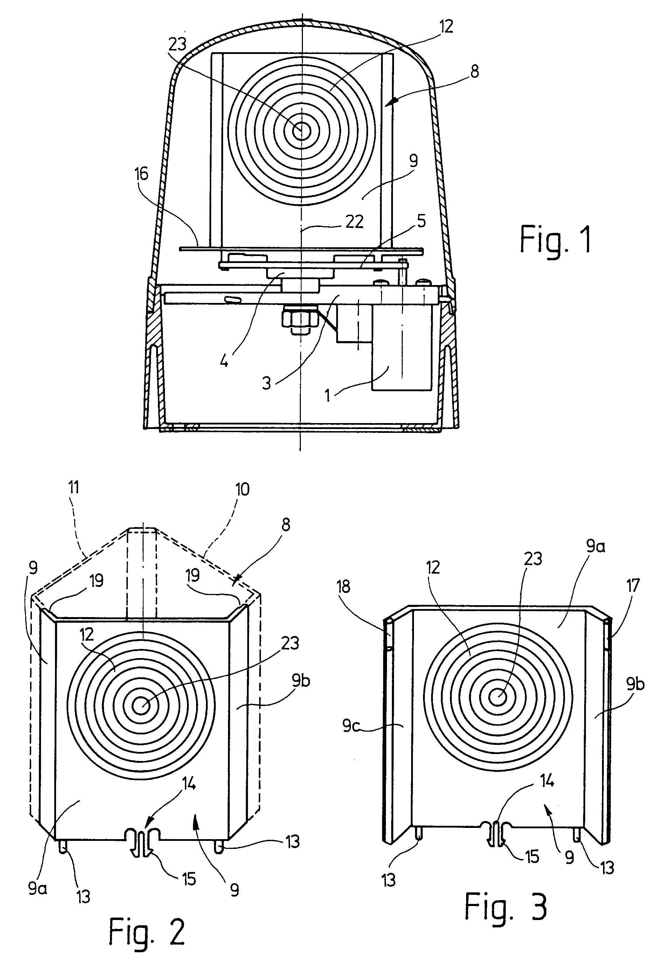

Die Leuchte der Fig. 1 besteht aus einem zylindrischen, topfartigen Gehäuseteil (1), in dem an einer Abdeckplatte (3) ein Antriebsmotor (2) gelagert ist. Das Gehäuseteil (1) kann in nicht näher dargestellter Weise z.B. auf das Dach eines Fahrzeuges geschraubt werden, das mit einer Blinkleuchte versehen werden soll.

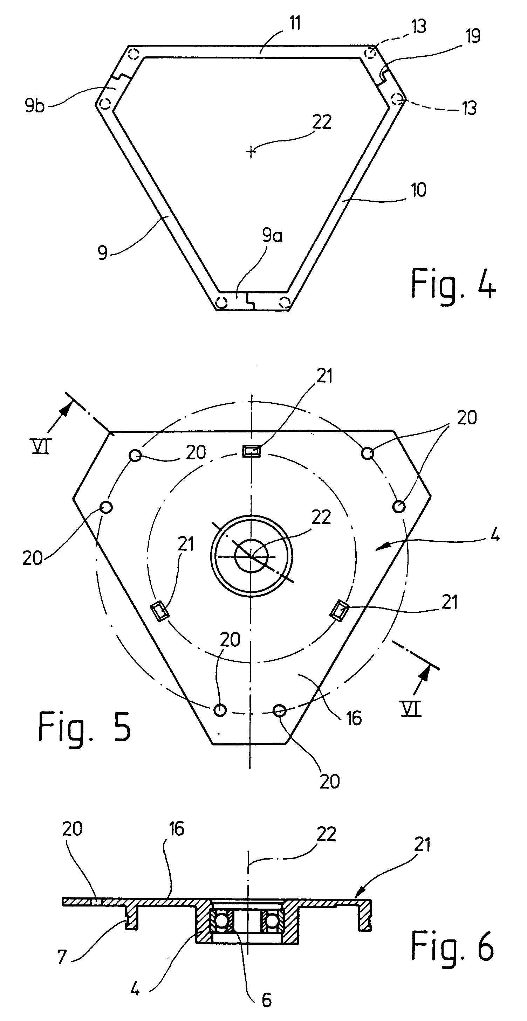

Auf der Deckplatte (3) ist ein Drehteller (4) gelagert, der vom Motor (2) aus, beispielsweise über einen Antriebsriemen (5), in Rotation versetzt werden kann. Auf dem Drehteller (4), der nach Fig. 6 mit einem Kugellager (6) auf einen nicht gezeigten, an der Deckplatte (3) angeordneten Zapfen aufsetzbar ist, und der mit einer Laufrille (7) für den Riemen (5) versehen ist, wird ein rahmenförmiger, beim Ausführungsbeispiel mit etwa dreieckförmigem Querschnitt versehener Linsenrahmen (8) aufgesetzt, dessen Aufbau im folgenden beschrieben wird.

Nach den Fig. 2 bis 4 besteht der Linsenrahmen (8) aus drei Scheiben (9, 10 und 11), die alle drei untereinander identisch aufgebaut sind. Es wird daher im folgenden nur die Scheibe (9) beschrieben. Die Scheibe (9) besteht zunächst aus einer im wesentlichen ebenen Hauptfläche (9a), die mit einer Fresnellinse (12) versehen ist. Die Scheibe (9) ist aus Kunststoff gefertigt und die Fresnellinse (12) läßt sich daher sehr einfach herstellen. An ihrem unteren Rand besitzt die Scheibe (9) zwei seitlich angeordnete, nach unten abragende Zapfen (13), die, wie noch erläutert werden wird, in entsprechende Öffnungen des Drehtellers (4) einsteckbar sind. In der Mitte besitzt die Scheibe (9) zwischen den beiden Zapfen (13) einen gabelartig ausgebildeten nach unten ragenden Vorsprung (14), der an seinen beiden Schenkeln jeweils mit nach außen weisenden Rasthaken (15) versehen ist. Diese Rasthaken (15) sind ebenfalls dazu gedacht, in eine entsprechende Ausnehmung am Drehteller (4) einzurasten, wenn die Scheibe (9) mit ihrer Fläche (9a) senkrecht zu einer oberen Platte (16) des Drehtellers auf diesen aufgesteckt wird.

Die Scheibe (9) - analog die Scheiben (10 und 11) - besitzt zwei abgewinkelte Ränder (9b und 9c), die jeweils unter 120° zur Fläche (9a) geneigt angeordnet sind. An der oberen Kante des Randes (9b) befindet sich nun ein in Richtung des Randes (9b) verlaufender, nach außen abragender Zapfen in der Form eines Wulstes (17), zu dem korrespondierend im Rand (9c) eine zylindrische Aussparung (18) vorgesehen ist. Die Scheiben (9, 10 und 11) lassen sich daher formschlüssig dadurch miteinander verbinden, daß jeweils der zylindrische Wulst (17) des Randes (9b) in die zylindrische Ausnehmung (18) des Randes (9c) der benachbarten Scheibe von oben her, d.h. in Richtung der Längsachse der Ränder (9b, 9c) eingefügt wird. Die Ränder (9b und 9c) sind außerdem noch mit entsprechenden Abkantungen (19) versehen, die bei zusammengefügten Scheiben etwas übereinander greifen, um so das Zusammenpassen der Scheiben (9 bis 11) zu dem in Fig. 2 gezeigten Linsenrahmen zu erleichtern. Ist daher zunächst der Linsenrahmen nach Fig. 2 durch Ineinanderfügen der Wulste (17) und der Ausnehmungen (18) sowie durch das Übereinandergreifen der Ränder (19) hergestellt, dann kann der so gebildete Dreiecksrahmen von oben auf die Platte (16) des Drehtellers aufgesetzt werden.

Der Drehteller (4) ist gemäß Fig. 5 und 6 mit einer in etwa der Kontur des Linsenkörpers (8) angepaßten Platte (16) versehen, die mit durchgehenden Öffnungen (20) mit Kreisquerschnitt versehen ist, wobei der Durchmesser dieser Öffnungen (20) dem Durchmesser der Zapfen (13) angepaßt ist. Zwischen jeweils zwei der Öffnungen (20) sind rechteckige Öffnungen (21) mit einer sich nach oben erweiternden Einführschräge vorgesehen, die zum Einführen der Rasthaken (15) dienen. Der Linsenrahmen (8) läßt sich daher von oben her mit seinen Zapfen (13) auf die Platte (16) aufstecken und wird durch das Verrasten der Rasthaken (15) an der Unterseite der Platte (16) fest mit dem Drehteller (4) verbunden.

Durch den nicht gezeigten Steckzapfen für das Kugellager (6) des Drehtellers (4) hindurch ist auch eine in den Figuren nicht gezeigte Lichtquelle mit Strom versorgt, die in nicht näher gezeigter, weil bekannter Weise in der Mitte des Linsenrahmens (8) so angeordnet ist, daß ihr Glühwendel in einer senkrecht zu der Drehachse (22) liegenden Ebene angeordnet ist, die durch den Mittelpunkt (23) der Fresnellinsen (12) verläuft. Rotiert daher der vom Motor (2) her angetriebene Linsenrahmen (8), dann wird das von der Lichtquelle abgegebene Licht in rotierende Strahlen umgesetzt, wie sie bei einer umlaufenden Kennleuchte erforderlich sind.

Der Gesamtaufbau der Leuchte ist, wie erläutert wurde, äußerst einfach.

## Patentansprüche

1. Leuchte, insbesondere Kennleuchte mit einer Lichtquelle und einer um diese drehbaren Linsenoptik, die aus mehreren gleichmäßig auf einem um die Lichtquelle gelegten Kreis verteilten Linsen besteht, die auf einem Drehteller angeordnet sind, dadurch gekennzeichnet, daß die Linsen als Fresnellinsen (12) auf je einer Scheibe (9, 10, 11) ausgebildet sind, und daß diese Scheiben (9, 10, 11) jeweils mit zwei Rändern (9b, 9c) unmittelbar aneinandergesetzt und zu einem Linsenrahmen (8) zusammengesetzt sind, der auf dem Drehteller (4) sitzt.

2. Leuchte nach Anspruch 1, dadurch gekennzeichnet, daß die Scheiben (9, 10, 11) jeweils unter 120° abgewinkelte Randbereiche (9b, 9c) besitzen, daß einer dieser Randbereiche (9b) mit mindestens einem nach außen abstehenden Zapfen (17) und der andere mit entsprechenden Aussparungen (18) versehen ist, so daß die Scheiben (9, 10, 11) zu einem Linsenrahmen (8) mit dreieckförmigem Querschnitt formschlüssig aneinandersetzbar sind.

3. Leuchte nach Anspruch 2, dadurch gekennzeichnet, daß der Zapfen (17) als ein zylindrischer, längs der Oberkante des Randes (9b) verlaufender Wulst (17) und die Ausnehmung (18) als eine zylindrische Kammer ausgebildet ist, deren Querschnitt dem Durchmesser des Zapfens (17) angepaßt ist.

4. Leuchte nach den Ansprüche 1 bis 3, dadurch gekennzeichnet, daß die Unterseite der Ränder (9b, 9c) mit zu ihrer Längsachse fluchtenden Zapfen (13) zur Fixierung am Drehteller versehen ist.

5. Leuchte nach den Ansprüche 1 bis 4, dadurch gekennzeichnet, daß in der Mitte jeder Scheibe (9, 10, 11) und auf der Seite der Zapfen (13) ein Rastmittel (14) zum Verrasten am Drehteller (4) vorgesehen ist.

6. Leuchte nach Anspruch 5, dadurch gekennzeichnet, daß der Drehteller (4) eine Tragplatte (16) aufweist, die mit Öffnungen (20) zum Einsetzen der Zapfen (13) und mit jeweils zwischen zwei dieser Öffnungen liegenden rechteckigen Öffnungen (21) zum Einsetzen der Rastmittel (14) versehen ist.

7. Leuchte nach Anspruch 6, dadurch gekennzeichnet, daß die Rastmittel (14) zum Einsetzen in die Öffnungen (21) aus einer Gabel bestehen, deren Schenkel jeweils mit nach außen ragenden und unter die Platte (16) greifenden Rasthaken (15) versehen sind.
